# EUROPÄISCHE PATENTSCHRIFT

(11) **EP 1 313 268 B1**
(45) Veröffentlichungstag und Bekanntmachung des Hinweises auf die Patenterteilung: **09.02.2005**
(21) Anmeldenummer: 01440286.1
(22) Anmeldetag: 29.08.2001
(51) Int. Cl.: H04L 12/56, H04L 29/06

(54) **Router**
Router
Routeur

(43) Veröffentlichungstag der Anmeldung: 21.05.2003
(73) Patentinhaber: ALCATEL, 75008 Paris (FR)
(72) Erfinder: Klotsche, Ralf, 75305 Neuenbürg (DE)
(74) Vertreter: Menzietti, Domenico, Dipl.-Ing

(56) Entgegenhaltungen:
- EP-A- 1 079 660
- WO-A-00/30307
- WO-A-01/03400
- US-A- 6 141 323
- HOU Y T ET AL: "A differentiated services architecture for multimedia streaming in next generation Internet" COMPUTER NETWORKS, ELSEVIER SCIENCE PUBLISHERS B.V., AMSTERDAM, NL, Bd. 32, Nr. 2, Februar 2000 (2000-02), Seiten 185-209, XP004304666 ISSN: 1389-1286

## Beschreibung

Die Erfindung betrifft einen Router.

Router werden in Telekommunikationsnetzen z.B. als Schnittstelle eingesetzt zwischen einem Internet Protokoll basierten Backbone Netzwerk und einem Zugangsnetz, z.B. einem DSL-Netzwerk; DSL = Digital Subscriber Line. DSL-Netzwerke sind z.B. als ADSL, SDSL, VHDSL ausgeführt, wobei A für Asymmetric, S für Symmetric und VH für Very High steht.

Ein Router beinhaltet üblicherweise einen Paketspeicher und eine Ausleseeinheit und dient dem Routen von empfangenen Informationspaketen. Im Paketspeicher werden die empfangenen Informationspakete zwischengespeichert. Router, die keine Dienste-Qualitäten unterscheiden, arbeiten nach den FIFO (first in first out) Prinzip, d.h. jedes Paket wird sofort nach dem Empfang weitergeleitet. Router, die unterschiedliche Dienste-Qualitäten unterscheiden und jeden einzelnen Datenfluss getrennt behandeln müssen, werten Teile jedes Paketes aus und vergleichen es mit einer Liste von Klassifizierern, die die Zuordnung des Paketes zu einem Datenstrom ermöglichen. Nach der Zuordnung werden in einem Zwischenspeicher lediglich Zeiger auf die Informationspakete zwischengespeichert. Der Klassifizierer ist vorgesehen, um die Zeiger der Informationspakete aus dem empfangenen Paketstrom zu extrahieren, zu evaluieren und dem mindestens einen Zwischenspeicher zuzuführen. Die Ausleseeinheit dient dazu, die zwischengespeicherten Zeiger auszulesen und anhand der ausgelesenen Zeiger die den ausgelesenen Zeigern zugeordneten Informationspakete zu detektieren und auszulesen. Für die Ausleseprozedur wird ein sogenannter Weighted-Round Robin (WRR) Mechanismus verwendet. Dabei werden unterschiedliche Zwischenspeicherbereiche nacheinander und in vorgegebenen Zeitfenstern ausgelesen. Dieses Verfahren sorgt dafür, das an den Ausgängen der Routers jeder Datenfluss und jede Dienste-Klasse die für sie vorgesehene Bandbreite erhölt. Die Reihenfolge der Pakete zwischen den verschiedenen Datenflüssen kann sich durchaus ändern, innerhalb eines Datenflusses ändert sich die Reihenfolge Pakete jedoch nicht.

Informationspakete werden üblicherweise in unterschiedlichen, sogenannten Quality of Service (QoS) Klassen übertragen. Eine Quality of Service Klasse spezifiziert beispielsweise Sprache über Internet, dem sogenannten Voice over Internet Protocol (VolP). Eine andere Quality of Service Klasse spezifiziert beispielsweise den sogenannten Best Effort (BE) Service. In Informationspaketen können als Information Sprache, Daten, Video, Internet Web-Seiten, etc. übertragen werden.

Die Router, die eine dienstespezifische Vergebührung unterstützen, müssen jedes Informationspaket individuell klassifizieren und routen unter Berücksichtigung von unterschiedlichen Anforderungen.

Die gesamte Bandbreite eines Übertragungskanals wird unter den angebotenen Dienstetypen aufgeteilt, vergleichbar der Aufteilung eines Kreises in Sektoren. "Weighted" bedeutet, dass die Sektoren ungleich groß sein können, um dem gegebenen Verkehrsprofil gerecht zu werden. Der Trick für QoS besteht darin, dass die Sektoren für VolP immer etwas größer sind als der Bedarf, und dass sie hinreichen schnell aufeinander folgen. Für Best Effort Verkehr gibt es keine Qulitätsgarantie und die bereitgestellte Bandbreite kann kleiner sein als die angeforderte. Die Sektoren im WRR dürfen im Vergleich zum aufkommenden Verkehr zu klein sein. Daher können Best Effort Pakete am WRR kollidieren, verzögert oder ganz fallen gelassen werden.

Die Suche nach Zeigern erfordert Zeit, wodurch die Verarbeitungsgeschwindigkeit des Routers beeinträchtigt wird. Zudem kann eine längere Suche dazu führen, dass im Ausgangsinformationspaketstrom Lücken auftreten, in denen keine Informationspakete übertragen werden, was zu einer geringeren Informationsrate führt. Ferner ist für das Auslesen eines Zwischenbereichs ein vorgegebener Zeitschlitz reserviert, so dass durch eine längere Suche die Abarbeitung des Zwischenspeicherbereichs beeinträchtigt wird, wodurch es zu einem Überlauf des Zwischenspeicherbereichs kommen kann, der zu Informationsverlust führt.

Zudem ist ein Verfahren implementiert, das einzelne Informationspakete, die zwischengespeichert aber noch nicht ausgelesen wurden, zufallsgesteuert entfernt, wenn die Datenrate der empfangenen Informationspakete die Datenrate der ausgelesenen Informationspakete übersteigt. Dieses Verfahren wird als RED = Random Early Discard bezeichnet, oder auch als RIO = RED with In and Out. Anstelle der zwischengespeicherten können auch empfangene Informationspakete entfernt werden. Die entfernten Informationspakete werden nicht zur Zieladresse übertragen und sind unwiderbringlich verloren. Das Verfahren dient dem sogenannten Load Balancing, also einem gesteuerten Durchsatz abhängig vom Verkehrsaufkommen um insbesondere ein Blockieren zu verhindern. Zur Ermöglichung des RED ist die Kenntnis der Füllstände der Zwischenspeicherbereiche notwendig. Mittels einer oder mehrerer separaten Detektionseinheiten werden die Füllstände der Zwischenspeicherbereiche überwacht. Dazu ist insbesondere in Scannen der Zwischenspeicherbereiche in kurzen zeitlichen Abständen erforderlich. Die detektierten Füllstände werden zu den RED Verorbeitungseinheiten übertragen, die ein Entfernen von Informationspaketen veranlassen, wenn ein Füllstand einen vorgegebenen Schwellwert übersteigt.

In EP 1 079 660 A1 ist eine Speicherfüllstandsregelung offenbart. Mittels zweier Überwachungsschaltungen wird die Annahme von empfangenen ATM Zellen unterschiedlicher Priorität im Speicher gesteuert. Mittels der ersten Überwachungsschaltung wird der Füllstand eines partiellen Speicherbereichs gegen den Datenstrom verglichen. Mittels der zweiten Überwachungsschaltung wird der globale Füllstand gegen einen minimalen und einen maximalen verglichen. Nur wenn beide Überwachungsschaltungen eine Annahmevervveigerung ermitteln wird diese dem Speicher übermittelt.

In US 6,141,323 ist eine Queue-Längen-Messvorrichtung offenbart. Jeder Queue, in der Datenzellen gespeichert werden, ist ein Differenzzähler zugeordnet. Der Zählerstand wird erhöht wenn eine Zelle in die Queue geschrieben wird und erniedrigt wenn eine Zelle ausgelesen wird. Eine Intervall-Messvorrichtung ist mit dem Differenzzähler gekoppelt und generiert Pulse, um den Zähler nach festen Zeitintervallen zurückzusetzen. Mittels eines Multiplexers und einer Steuerschaltung werden die Zählerstände weitergeleitet und dienen zur Steuerung des Zellenflusses.

Aufgabe der Erfindung ist es, einen Router zu schaffen, der eine vereinfachtes Load Balancing ermöglicht.

Gelöst wird diese Aufgabe durch einen Router nach Anspruch 1.

Erfindungsgemäß wird über die Rückkopplung eine indirekte Information über die Füllstände der Zwischenspeicherbereiche zur mindestens einen RED Verarbeitungseinheit gegeben. Separate Detektionseinheiten sind keine vorhanden und auch nicht erforderlich. Die Ausleseeinheit arbeitet vorteilhafterweise mit dem Weighted Round-Robin Mechanismus und übermittelt der mindestens einen RED Verarbeitungseinheit Informationen über die in den Zeitschlitzen abgearbeiteten Zwischenspeicherplätze. Der erfindungegemäße Router berücksichtigt in vorteilhafter Weise einzelne Datenflüsse und/oder Dienste-Klassen.

Vorteilhafte Ausgestaltungen sind den abhängigen Ansprüchen und der nachfolgenden Beschreibung zu entnehmen.

Im folgenden wird die Erfindung anhand eines Ausführungsbeispiels und unter Zuhilfenahme von drei Figuren erläutert. Es zeigen:
- Fig. 1: eine schematische Darstellung eines erfindungsgemäßen Routers,
- Fig. 2: Ausschnitt aus dem Router aus Fig. 1,
- Fig. 3: einen weiteren Ausschnitt aus dem Router aus Fig. 1.

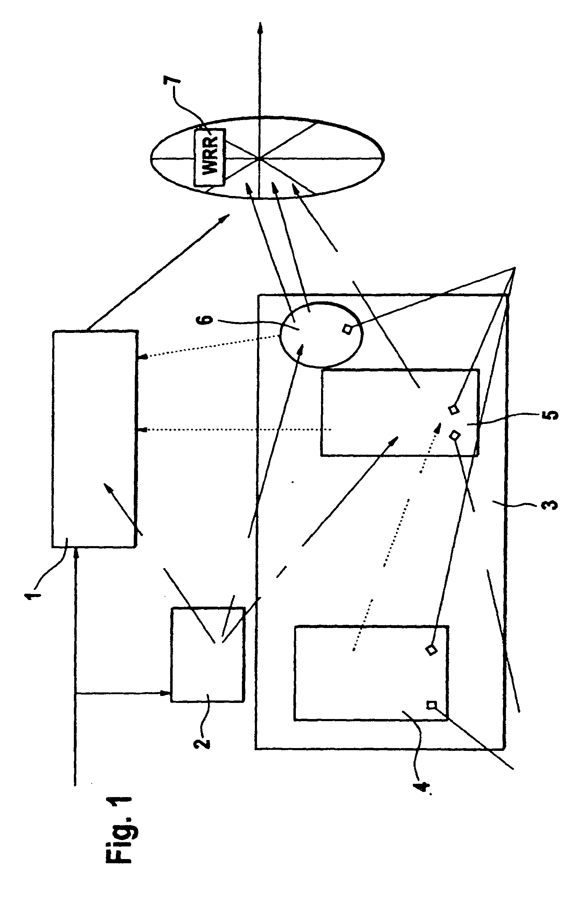

Der Router aus Fig.1 beinhaltet einen Klassifizierer 2, einen Zwischenspeicher 3, einen Paketspeicher 1 und eine Ausleseeinheit 7 und dient dem Routen von empfangenen Informationspaketen.

Im Paketspeicher 1 werden die empfangenen Informationspakete zwischengespeichert. Die Informationspakete sind beispielsweise Internet Protocol Pakete. In ihnen können z.B. Sprache, Daten oder Video übertragen werden.

Im Zwischenspeicher 3 werden die beim Empfang der Informationspakete zugewiesenen Zeiger für die Informationspakete zwischengespeichert. Der Zwischenspeicher kann z.B. aus einem Speicher mit mehreren Speicherbereichen oder mehreren Speichern mit jeweils einem oder mehreren Speicherbereichen bestehen.

Der Klassifizierer 2 ist vorgesehen, um die Informationspakete aus dem empfangenen Paketstrom zu bewerten und einzelnen Datenflüssen zuzuordnen, zu evaluieren und die entsprechenden Zeiger dem Zwischenspeicherbereich 5 oder 6 je noch Bedarf des Datenbusse zuzuführen.

Beim Zugriff durch den Klassifizierer 2 werden die im Zwischenspeicher 3 gespeicherten Zeiger für Informationspakete bei Bedarf geordnet. Droht beispielsweise ein Überlauf in einem Zwischenspeicherbereich, so werden einzelne Zeiger ausgewählt und aus dem Zwischenspeicherbereich entfernt. Die ausgewählten Zeiger werden z.B. in einen zusätzlichen Zwischenspeicherbereich verschoben. Dieser zusätzliche Zwischenspeicherbereich wird dann bevorzugt ausgelesen, so dass die ausgewählten Zeiger vor den Zeigern im Zwischenspeicherbereich ausgelesen werden. Kriterium für die Auswahl eines Zeigers ist z.B. eine abgelaufene Reaktivierungszeit oder ein über einen Schwellwert gefüllter Zwischenspeicherbereich.

Die Ausleseeinheit 7 dient dazu, die zwischengespeicherten Zeiger auszulesen und anhand der ausgelesenen Zeiger die den ausgelesenen Zeigern zugeordneten Informationspakete zu detektieren und auszulesen. Für die Ausleseprozedur wird ein sogenannter Weighted-Round Robin (WRR) Mechanismus verwendet. Dabei werden unterschiedliche Zwischenspeicherbereiche nacheinander und in vorgegebenen Zeitfenstern ausgelesen. Ein übliches Weighted Fair Queueing (WFQ) teilt jedem Datentyp eine gewisse Bandbreite zu. Die Erfindung behandelt zusätzlich einzelne Datenströme. Mittels der Erfindung wird damit ein erweitertes Weighted Fair Queueing realisiert.

Zwischenspeicher 3 beinhaltet einen Zwischenspeicherbereich 4 für einen Suchbaum, einen Zwischenspeicherbereich 5 für die Speicherung von Zeigern für Informationspakete und einen weiteren Zwischenspeicherbereich 6 zur Speicherung von ausgewählten Zeigern für Informationspakete.

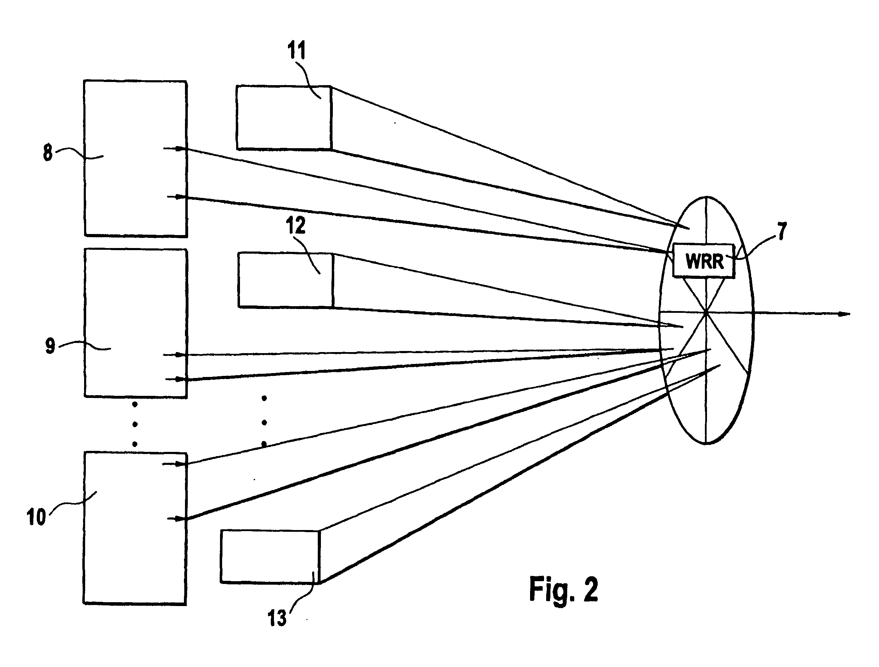

Zwischenspeicherbereich 5 beinhaltet Zwischenspeicherbereiche 8, 9, 10, die in Fig. 2 dargestellt sind und zur Speicherung von Zeigen für Informationspakete unterschiedlicher Quality of Service Klassen dienen.

Der weitere Zwischenspeicherbereich 6 beinhaltet Zwischenspeicherbereiche 11, 12, 13, die in Fig. 2 dargestellt sind und zur Speicherung von ausgewählten Zeigen für Informationspakete unterschiedlicher Quality of Service Klassen dienen. Zwischenspeicherbereich 11 ist Zwischenspeicherbereich 8 zugeordnet, Zwischenspeicherbereich 12 Zwischenspeicherbereich 9, Zwischenspeicherbereich 13 Zwischenspeicherbereich 10.

Die Zwischenspeicherbereiche 4, 5, 6, 8, 9, 10, 11, 12, 13 des Zwischenspeichers können mittels Software kontrolliert und dimensioniert werden.

Klassifizierer 2 schreibt die detektierten und nach Quality of Service Klassen geordneten Zeiger in die entsprechenden Zwischenspeicherbereiche 8, 9, 10. Jeder Zeiger wird beispielsweise zusammen mit einer Reaktivierungszeit abgespeichert.

Wenn sich ein Zwischenspeicherbereich 8, 9, 10 über einen bestimmten Schwellwert füllt oder wenn die Reaktivierungszeit eines in einem Zwischenspeicherbereich 8, 9, 10 gespeicherten Zeigers abgelaufen ist, werden ein oder mehr Zeiger in den zugeordneten weiteren Zwischenspeicherbereich 11, 12, 13 verschoben, z.B. Zeiger aus Zwischenbereich 8 in weiteren Zwischenspeicherbereich 11.

Die Ausleseeinheit 7 hat direkten Zugriff zu den Zwischenspeicherbereichen 8, 9, 10 und den weiteren Zwischenspeicherbereichen 11, 12, 13. Letztere werden zuerst bedient. Die weiteren Zwischenspeicherbereiche 11, 12, 13 haben jeweils eine kleinere Speicherplatzkapazität als die zugeordneten Zwischenspeicherbereiche 8, 9, 10.

Zwischenspeicherbereich 8 und weiterer Zwischenspeicherbereich 11 bilden eine Gruppe. Eine weitere Gruppe bilden Zwischenspeicherbereich 9 und weiterer Zwischenspeicherbereich 12. Eine weitere Gruppe bilden Zwischenspeicherbereich 10 und weiterer Zwischenspeicherbereich 13. Die Ausleseeinheit 7 greift auf eine Gruppe für eine vorbestimmte Zeitspanne zu. Zunächst wird der weitere Zwischenspeicherbereich, z.B. ausgelesen. Die vorbestimmte Zeitspanne ist so bestimmt, dass alle im weiteren Zwischenspeicherbereich 11 gespeicherten Zeiger ausgelesen und die zugehörigen Datenpakete weiter versendet werden können. Die weiteren Zwischenspeicherbereiche 11, 12, 13 können jeweils als Ringspeicher ausgeführt sein und ermöglichen eine Staffelung von Bearbeitungsprioritäten. In der verbleibenden Zeitspanne greift die Ausleseeinheit 7 auf Zwischenspeicherbereich 8 zu, um weitere Datenflüsse zu bedienen, die keine erhöhte Priorität besitzen. Bei hoher Last wird selbst bei VolP nur ein Teil der Zwischenspeicherbereiche 9, 10 abgearbeitet. Immer aber werden in den zugehörigen Zeitschlitzen die Zwischenspeicherbereiche 12, 13 vollständig abgearbeitet, um einzelne Pakete, die bereits eine hohe Latenzzeit haben, abzuarbeiten.

Die Ausleseeinheit ermittelt anhand jedes einzelnen Zeigers wieder das zugehörige Paket und veranlasst dessen Übertragung.

Die Zeitspanne zum Zugreifen auf eine Gruppe kann gleich oder unterschiedlich sein zu der Zeitspanne zum Zugreifen auf eine andere Gruppe.

Anstelle einer Ausleseeinheit 7 können zwei oder mehr Ausleseeinheiten verwendet werden, die Zugriff auf unterschiedliche Gruppen haben können. Ausleseeinheit 7 kann in Hard- und/oder Software ausgeführt sein. Klassifizierer 2 kann in Hard- und/oder Software ausgeführt sein.

Der Router kann Teil eines sogenannten interaktiven Netzwerkadapters sein und kann z.B. verwendet werden im Zusammenhang mit der Umsetzung von z.B. IP- oder ATM-Protokolle in z.B. DOCSIS-, DVB-, HFC-, MAC- oder HFR-Protokolle.

In Zwischenspeicherbereich 4 ist eine Suchliste in Form einer Baumstruktur gespeichert. Sie dient dazu, eine Übereinstimmung zwischen Datenelementen des Paketes im Packetbuffer 1 und Klassifizierungselement durchzuführen.
Ein im Klassifizierer 2 angeordneter Komparator vergleicht die Klassifizierungselemente eines Kopfes eines empfangenen Informationspakets, also z.B. einen IP-Header, mit den Einträgen in der Baumliste. Jeder Vergleich offenbart, ob das Klassifizierungselement kleiner, größer oder gleich dem Element der Baumliste ist. Die Suchliste ist in Form eines Baumes strukturiert mit drei Verzweigungen an jedem Knoten. Das Ergebnis eines jeden Vergleichs wird für eine Adressoperation benutzt. Wenn die entsprechende Adresse des Zwischenspeicherbereichs gefunden ist, wird der entsprechende Zeiger an die aufgefundene Adresse im Zwischenspeicher gespeichert. Optional ist im Zwischenspeicherbereich 4 eine zweite Suchliste mit einer zweiten Baumstruktur gespeichert. Zur gleichen Zeit wird nur eine der beiden Baumstrukturen vom Komparator verwendet. Die nicht verwendete Baumstruktur kann in der Zwischenzeit adaptiert, reorganisiert, restrukturiert, etc. werden. Auf diese Weise wird vom Komparator stets eine aktuelle und optimierte Baumstruktur verwendet.

Anstelle eines Suchliste kann im Zwischenspeicherbereich 4 auch eine andere Struktur verwendet werden. An Stelle eines direkten Vergleiches von Datenfeldern kann auch eine sogenannte "Hashing"- Funktion eingesetzt werden um den Vergleichsvorgang zu optimieren. Auch die Verwendung eines Komparators ist optional.

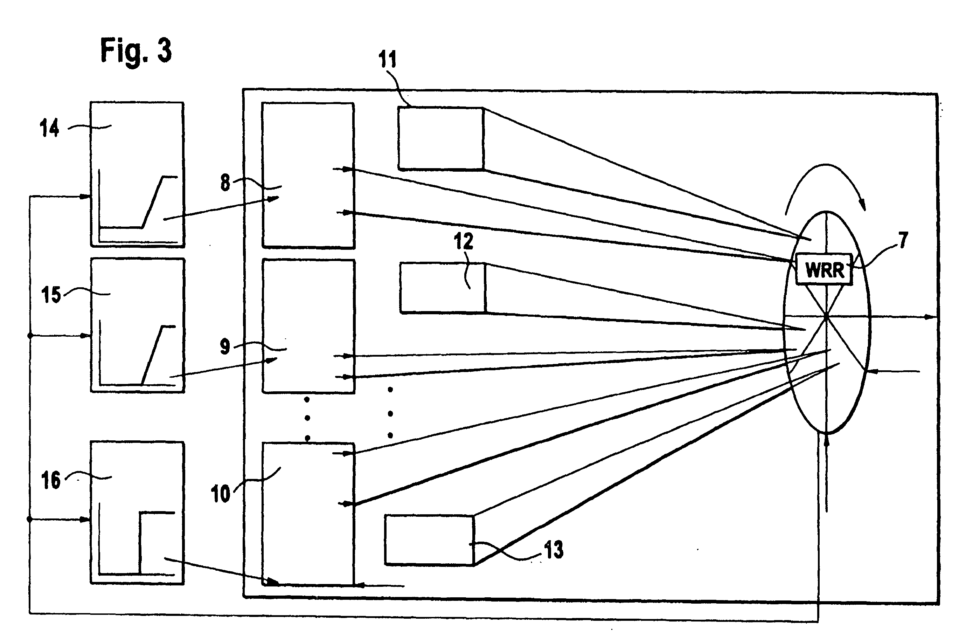

Fig. 3 zeigt einen weiteren Ausschnitt aus dem Router aus Fig. 1.

Neben den Zwischenspeicherbereichen 8, 9, 10, den weiteren Zwischenspeicherbereichen 11, 12, 13 und der Ausleseeinheit 7 ist mindestens eine RED Verarbeitungseinheit 14, 15, 16 vorgesehen.

Von der Ausleseeinheit 7 zur mindestens einen RED Verarbeitungseinheit 14, 15, 16 ist eine Rückkoppelschleife vorgesehen, um die Aktivierung und die Deaktivierung der mindestens einen RED Verarbeitungseinheit 14, 15, 16 zu steuern.

Die Ausleseeinheit 7 arbeitet mit dem Weighted Round-Robin Mechanismus und übermittelt der mindestens einen RED Verarbeitungseinheit 14, 15, 16 Informationen über die in den Zeitschlitzen abgearbeiteten Zwischenspeicherplätzen

Anstelle der mindestens einen RED Verarbeitungseinheit ist mindestens eine RIO Verarbeitungseinheit vorgesehen.

Der Router ist in einer bevorzugten Ausgestaltung insbesondere dadurch gekennzeichnet, dass n Zwischenspeicherbereiche und n RED Verarbeitungseinheiten 14, 15, 16 vorgesehen sind, dass n eine natürliche Zahl ist, wobei n z.B. eine Zahl zwischen 2 und 100 ist, dass jedem Zwischenspeicherbereich eine RED Verarbeitungseinheit 14, 15, 16 zugeordnet ist, und dass für jede RED Verarbeitungseinheit 14, 15, 16 jeweils eine Rückkoppelschleife von der Ausleseeinheit 7 zur entsprechenden RED Verarbeitungseinheit 14, 15, 16 vorgesehen ist.

Die Rückkopplung kann z.B. als Hardware Lösung oder Software Lösung implementiert werden. Bei einer Hardware Lösung werden zur Zwischenspeicherung von Parametern z.B. Register verwendet. Bei einer Software Lösung wird z.B. für einen Funktionsaufruf und die Rückgabewerte ein Kommando mit zwei Parametern verwendet: Flow type und Anzahl der abgearbeiteten Flows, z.B.: "ExecuteRlO(ActuoiQosCloss, NumberOfServedFlows)". Der Flow type charakterisiert den speziellen Zwischenspeicherbereich und die abgearbeiteten Flows den Anteil der abgearbeiteten Zwischenspeicherplätze in einem Zeitschlitz. Zwischenspeicherplätze können auch Zwischenspeichersegmente sein. Die Ausleseeinheit 7 arbeitet in einem, einem Zwischenspeicherbereich8, 9, 10 zugeordneten Zeitschlitz eine bestimmte Anzahl von Zwischenspeicherplätzen ab. Je noch Füllstand des Zwischenspeicherbereichs 8, 9, 10 wird ein mehr oder weniger großer Anteil der Zwischenspeicherplätze abgearbeitet. Der WRR kann auf verschiedene Art und Weise organisiert werden, z.B. ist in einem Fall die Anzahl der Zeiger und damit der Pakete bei Volllast absolut konstant oder in einem anderen Fall im zeitlichen Mittel konstant. Der Anteil der abgearbeiteten Zwischenspeicherplätze kann dem Verhältnis der Anzahl der ausgelesenen Zeiger zur Anzahl der im Zwischenspeicherbereich nach Ablauf des Zeitschlitzes verbliebenen, abgespeicherten Zeiger entsprechen. In jedem Zeitschlitz bearbeitet die Ausleseeinheit den entsprechenden Zwischenspeicherbereich von einer Startadresse zu einer Endadresse. Die Startadresse ist durch die Endadresse des dem entsprechenden Zwischenspeicherbereich zugeordneten vorangegangenen Zeitschlitzes vorgegeben. Die Endadresse ist die am Ende des Zeitschlitzes nach Abarbeitung der Zwischenspeicherplätze entstehende Adresse. Aus der Differenz von Start- und Zieladresse ist der Ausleseeinheit 7 die Anzahl der abgearbeiteten Zwischenspeicherplätze somit bekannt. Diese Information wird der entsprechenden RED Verarbeitungseinheit zur Verfügung gestellt, der unter Zuhilfenahme der Gesamtsumme aller Zwischenspeichen einer Dienste-Klasse die Last ermitteln kann. Beispielsweise werden in dem, dem Zwischenspeicherbereich 8 zugeordneten Zeitschlitz zehn Zwischenspeicherplätze abgearbeitet. Die Information über die zehn abgearbeiteten Zwischenspeicherplätze wird der RED Verarbeitungseinheit 14 zugeführt. Die RED Verarbeitungseinheit 14 entscheidet daraufhin mittels dieser Information ob und wenn ja, wie viele Zeiger aus dem Zwischenspeicherbereich 8 entfernt werden. Die Anzahl der zu entfernenden Zeiger kann beispielsweise Null, fünf oder zehn sein. Die Anzahl der zu entfernenden Zeiger ist zum einen abhängig von der Anzahl der abgearbeiteten Zwischenspeicherplätze und zum anderen von der Steilheit der Entscheidungskurve der RED Verarbeitungseinheit 14.

Es können unterschiedliche RED Verarbeitungseinheiten 14, 15, 16 mit unterschiedlichen Entscheidungskurven verwendet werden, z.B. zur Verwendung für unterschiedliche Dienste. Beispielsweise wird eine RED Verarbeitungseinheit 14 mit einer flachen Entscheidungskurve und einem von Null verschiedenen Anfangswert für einen Best Effort Dienst für Zwischenspeicherbereich 8 verwendet, eine RED Verarbeitungseinheit 15 mit einer flachen Entscheidungskurve mit dem Anfangswert Null für einen QoS Dienst mit variabler Datenrate für Zwischenspeicherbereich 9, und eine RED Verarbeitungseinheit 16 mit einer steilen Entscheidungskurve für einen VolP Dienst mit konstanter Datenrate für Zwischenspeicherbereich 10.

Es besteht ein Zusammenhang zwischen Load (= Verkehrslast, Auslastung) eines Zwischenspeicherbereichs, Anteil abgearbeiteter Zwischenspeicherplätze und Füllstand des Zwischenspeicherbereichs. Durch Übermittlung der abgearbeiteten Zwischenspeicherplätze triggert die Ausleseeinheit 7 somit die RED Verarbeitungseinheiten 14, 15, 16, indem sie indirekt die entsprechenden Füllstände der Zwischenspeicherbereiche 8, 9, 10 als Parameter verwendet.

Die Verwendung der weiteren Zwischenspeicherbereiche 11, 12, 13 ist optional. Die Erfindung kann sowohl bei Ausführungen mit als auch ohne die weiteren Zwischenspeicherbereiche 11, 12, 13 angewendet werden.

## Patentansprüche

1. Router beinhaltend mindestens einen Zwischenspeicher (3) zur Zwischenspeicherung von Zeigern für Informationspakete in mindestens zwei unterschiedlichen Zwischenspeicherbereichen (5, 8, 9, 10), eine Ausleseeinheit (7) zum Auslesen der unterschiedlichen Zwischenspeicherbereiche (5, 8, 9, 10) nacheinander in vorgegebenen Zeitfenstern sowie mindestens eine Random Early Discard Verarbeitungseinheit (14, 15, 16) zum Entfernen von Zeigern aus Zwischenspeicherbereichen (5, 8, 9, 10), **dadurch gekennzeichnet, dass** eine Rückkopplung von der Ausleseeinheit (7) zur mindestens einen Verarbeitungseinheit (14, 15, 16) vorgesehen ist, um mindestens einen Parameter zur mindestens einen Random Early Discard Verarbeitungseinheit (14, 15, 16) zu übertragen, dass die Ausleseeinheit (7) mit dem Weighted Round-Robin Mechanismus ausgestattet ist und der mindestens einen Random Early Discard Verarbeitungseinheit (14, 15, 16) Informationen über die in den Zeitschlitzen abgearbeitete Anzahlyon Zwischenspeicherplätzen übermittel und dass die mindestens eine Random Early Discard Verarbeitungseinheit (14, 15, 16) Mittel zur Entscheidung anhand diesen Informationen enthält ob und wenn ja, wie viele Zeiger aus den mindestens zwei unterschiedlichen Zwischenspeicherbereichen (5, 8, 9, 10) entfernt werden, wobei die Anzahl der zu entfernenden Zeiger zum einen abhängig ist von der Anzahl der abgearbeiteten Zwischenspeicherpltätze und zum anderen von der steilheit der Entscheidungskurve der jeweilige Random Early Discard Verarbeitungseinheit (14, 15, 16).

2. Router noch Anspruch 1, **dadurch gekennzeichnet, dass** ein Klassifizierer (2) vorgesehen ist, um die Zeiger der Informationspakete aus dem empfangenen Paketstrom zu extrahieren, zu evaluieren und dem mindestens einen Zwischenspeicher (3) zuzuführen.

3. Router nach Anspruch 1, **dadurch gekennzeichnet, dass** jeder Zwischenspeicherbereich (5, 8, 9, 10) zur Zwischenspeicherung von Zeigern für Informationspakete dient, die einer speziellen Quality of Service Klasse angehören.

4. Router nach Anspruch 1, **dadurch gekennzeichnet, dass** n Zwischenspeicherbereiche und n Random Early Discard Verarbeitungseinheiten (14, 15, 16) vorgesehen sind, dass n eine natürliche Zahl ist, dass jedem Zwischenspeicherbereich eine Random Early Discard Verarbeitungseinheit (14, 15, 16) zugeordnet ist, und dass für jede Random Early Discard Verarbeitungseinheit (14, 15, 16) jeweils eine Rückkoppelschleife von der Ausleseeinheit (7) zur entsprechenden Randon Early Discard Verarbeitungseinheit (14, 15, 16) vorgesehen ist.

5. Router nach Anspruch 1, **dadurch gekennzeichnet, dass** mindestens ein weiterer Zwischenspeicherbereich (6, 11, 12, 13) vorgesehen ist, um ausgewählte Zeiger zu speichern, und dass beim Auslesen des mindestens einen Zwischenspeichers (3) der mindestens eine weitere Zwischenspeicherbereich (6, 11, 12, 13) ein bevorzugter Auslesebereich gegenüber den mindestens zwei unterschiedlichen Zwischenspeicherbereichen (5, 8, 9, 10) ist.

## Claims

1. Router containing at least one buffer memory (3) for the intermediate storage of pointers for information packets in at least two different buffer memory areas (5, 8, 9, 10), a readout unit (7) for reading out the different buffer memory areas (5, 8, 9, 10) one after the other in predetermined time windows, as well as at least one random early discard processing unit (14, 15, 16) for removing pointers from buffer memory areas (5, 8, 9, 10), **characterised in that** a feedback is provided from the readout unit (7) to at least one random early discard processing unit (14, 15, 16), in order to transmit at least one parameter to the at least one random early discard processing unit (14, 15, 16), that the readout unit (7) is equipped with the weighted round robin mechanism and the at least one random early discard processing unit (14, 15, 16) transmits information about the number of buffer memory locations processed in the time slots and that the at least one random early discard processing unit (14, 15, 16) contains means for deciding with the aid of this information whether, and if yes how many, pointers are removed from the at least two different buffer memory areas (5, 8, 9, 10), wherein the number of pointers to be removed depends, on the one hand, on the number of processed buffer memory locations and, on the other hand, on the steepness of the decision curve of the respective random early discard processing unit (14, 15, 16).

2. Router according to Claim 1, **characterised in that** a classifier (2) is provided in order to extract the pointers of the information packets from the received packet stream, to evaluate and to feed said pointers to the at least one buffer memory (3).

3. Router according to Claim 1, **characterised in that** each buffer memory area (5, 8, 9, 10) is used for the intermediate storage of pointers for information packets that belong to a special quality of service class.

4. Router according to Claim 1, **characterised in that** n buffer memory areas and n random early discard processing units (14, 15, 16) are provided, that n is a natural number, that a random early discard processing unit (14, 15, 16) is assigned to each buffer memory area, and that for each random early discard processing unit (14, 15, 16), a feedback loop is provided in each case from the readout unit (7) to the corresponding random early discard processing unit (14, 15, 16).

5. Router according to Claim 1, **characterised in that** at least one further buffer memory area (6, 11, 12, 13) is provided in order to store selected pointers, and that during the reading out of the at least one buffer memory (3), the at least one further buffer memory area (6, 11, 12, 13), is a preferred readout area compared to the at least two different buffer memory areas (5, 8, 9, 10).

## Revendications

1. Routeur comprenant au moins une zone de mémoire intermédiaire (3) pour le stockage intermédiaire d'indicateurs pour des paquets d'informations dans au moins deux zones de mémoire intermédiaire (5, 8, 9, 10) différentes, une unité de lecture (7) pour la lecture des zones des différentes zones de mémoire intermédiaire (5, 8, 9, 10) de façon successive dans des fenêtres de temps prédéfinies, et au moins une unité de traitement Random Early Discard (14, 15, 16) pour l'enlèvement d'indicateurs de zones de mémoire intermédiaire (5, 8, 9, 10), **caractérisé en ce qu'**il est prévu une rétroaction de l'unité d'analyse (7) à au moins une unité de traitement Random Early Discard (14, 15, 16) afin de transmettre au moins un paramètre à au moins une unité de traitement Random Early Discard (14, 15, 16), **en ce que** l'unité de lecture (7) est équipée avec le mécanisme Weighted Round Robin et transmet à la au moins une unité de traitement Random Early Discard (14, 15, 16) des informations sur le nombre, pris en charge dans les créneaux de temps, d'emplacements de mémoire intermédiaire, et **en ce que** la au moins une unité de traitement Random Early Discard (14, 15, 16) contient des moyens pour la décision à l'aide de ces informations, pour savoir si on enlève des indicateurs, et si oui combien, des au moins deux zones d'emplacement intermédiaire (5, 8, 9, 10) différentes, le nombre des indicateurs à enlever étant dépendant d'une part du nombre des emplacements de mémoire intermédiaire pris en charge et d'autre part de la pente de la courbe de décision de l'unité de traitement Random Early Discard (14, 15, 16) respective.

2. Routeur selon la revendication 1, **caractérisé en ce qu'**il est prévu un classificateur (2) pour extraire les indicateurs des paquets d'informations du flux de paquets reçus, de les évaluer et de les amener à au moins une mémoire (3).

3. Routeur selon la revendication 1, **caractérisé en ce que** chaque zone de mémoire intermédiaire (5, 8, 9, 10) sert au stockage provisoire d'indicateurs pour des paquets d'informations, qui font partie d'une classe Quality of Service spéciale.

4. Routeur selon la revendication 1, **caractérisé en ce que** n zones de mémoire intermédiaire et n unités de traitement Random Early Discard (14, 15, 16) sont prévues, et **en ce que** n est un nombre naturel, **en ce qu'**une unité de traitement Random Early Discard (14, 15, 16) est attribuée à chaque zone de mémoire intermédiaire et **en ce qu'**il est prévu pour chaque unité de traitement Random Early Discard (14, 15, 16) une boucle de rétroaction de l'unité de lecture (7) à l'unité de traitement Random Early Discard (14, 15, 16) correspondante.

5. Routeur selon la revendication 1, **caractérisé en ce qu'**il est prévu au moins une autre zone de mémoire intermédiaire (6, 11, 12, 13) pour stocker des indicateurs sélectionnés et **en ce que**, lors de la lecture de la au moins une zone intermédiaire (3) la au moins une autre zone de mémoire intermédiaire (6, 11, 12, 13) est une zone de lecture préférée par rapport aux au moins deux zones de mémoire intermédiaire (5, 8, 9, 10) différentes.
